(19) Europäisches Patentamt / European Patent Office / Office européen des brevets

(11) **EP 4 480 296 B1**

(12) **EUROPÄISCHE PATENTSCHRIFT**

(45) Veröffentlichungstag und Bekanntmachung des Hinweises auf die Patenterteilung:
**10.06.2026   Patentblatt 2026/24**

(21) Anmeldenummer: **24168633.6**

(22) Anmeldetag: **05.04.2024**

(51) Internationale Patentklassifikation (IPC):
**A01D 41/127** *(2006.01)*    **A01D 43/08** *(2006.01)*
**G06T 7/00** *(2017.01)*    **G06V 10/82** *(2022.01)*
**A01D 43/10** *(2006.01)*

(52) Gemeinsame Patentklassifikation (CPC):
**G06V 10/82; A01D 43/085; A01D 43/102;**
A01D 41/1277

(54) **BILDANALYSEVERFAHREN SOWIE SELBSTFAHRENDER FELDHÄCKSLER**

IMAGE ANALYSIS METHOD AND SELF-PROPELLED FORAGE HARVESTER

PROCÉDÉ D'ANALYSE D'IMAGE ET RAMASSEUSE-HACHEUSE AUTOMOTRICE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:   **22.06.2023   DE 102023116410**

(43) Veröffentlichungstag der Anmeldung:
**25.12.2024   Patentblatt 2024/52**

(73) Patentinhaber: **CLAAS Selbstfahrende Erntemaschinen GmbH 33428 Harsewinkel (DE)**

(72) Erfinder:
• **Neitemeier, Dennis 59510 Lippetal (DE)**
• **Belau, Sven Carsten 33332 Gütersloh (DE)**
• **Bönig Dr., Ingo 33330 Gütersloh (DE)**
• **Brune, Markus 33428 Harsewinkel (DE)**
• **Klein-Helmkamp, Marwin 49565 Bramsche (DE)**

(74) Vertreter: **CLAAS Gruppe Mühlenwinkel 1 33428 Harsewinkel (DE)**

(56) Entgegenhaltungen:
CN-B- 110 887 707    DE-A1- 102020 122 208
DE-A1- 102021 116 118    US-A1- 2022 022 375

EP 4 480 296 B1

**Beschreibung**

Die vorliegende Erfindung betrifft ein Bildanalyseverfahren gemäß dem Oberbegriff des Anspruches 1. Weiterhin betrifft die vorliegende Erfindung einen selbstfahrenden Feldhäcksler gemäß dem Oberbegriff des Anspruches 12.

Ein Verfahren zur computerimplementierten Bestimmung des Kornaufschlussgrades von Körnern innerhalb eines von Arbeitsaggregaten eines Feldhäckslers bearbeiteten Erntegutstroms, der ganze Körner und zerkleinerte Körner als Kornbestandteile sowie Nicht-Kornbestandteile umfasst, wobei mittels eines Kamerasystems zyklisch Bilder des Erntegutstroms aufgenommen und an eine Bildanalyseeinrichtung zur Auswertung übertragen werden, ist aus der DE 10 2014 011 308 A1 bekannt. Mittels des Verfahrens werden Abbildungen kornartiger Partikel in den Bildern identifiziert und anschließend in zwei Größenfraktionen sortiert. Durch das Ermitteln der Mächtigkeit der beiden Größenfraktionen wird auf den Kornaufschlussgrad geschlossen. Zumindest ein Arbeitsaggregat wird in Abhängigkeit vom bestimmten Kornaufschlussgrad angesteuert.

Aus der DE 10 2020 122 202 A1 ist ein Bilderkennungsalgorithmus bekannt, der auf machine learning basiert. Der in der DE 10 2020 122 202 A1 beschriebene Feldhäcksler weist ein Kamerasystem zur Aufnahme von Bilddaten von im Erntegutstrom enthaltenen Erntegut auf, die mittels des Bilderkennungsalgorithmus analysiert werden, um aus den geometrischen Eigenschaften nach einer vorbestimmten Berechnungsvorschrift Nicht-Kornbestandteile zu bestimmen, um den Strukturanteil der Nicht-Kornbestandteile im Erntegutstrom zu ermitteln. DE 10 2020 122 208 A1 offenbart ein Bildanalyseverfahren gemäß der Präambel des angehängten Anspruchs 1 sowie einen selbstfahrenden Feldhäcksler gemäß der Präambel des angehängten Anspruchs 12.

Des Weiteren ist aus der DE 10 2021 116118 A1 ein Bildanalyseverfahren per Smartphone für eine gezogene Probe von Silagematerial bekannt, bei dem mittels semantischer Segmentierung Bildpixel in Korn und Nicht-Kornbestandteile klassifiziert werden um in einem nachfolgenden Analyseschritt einen Größenwert der Kornbestandteile zu ermitteln. Anhand dessen wird schließlich ein Indikator für den Kornaufschluss abgeleitet.

Ausgehend vom vorstehend genannten Stand der Technik liegt der Erfindung die Aufgabe zugrunde, ein Bildanalyseverfahren der eingangs genannten Art weiterzubilden, welches die Prädiktion der Bestimmung ganzer Körner und zerkleinerter Körner im Erntegutstrom zur computerimplementierten Bestimmung des Kornaufschlussgrades verbessert.

Diese Aufgabe wird erfindungsgemäß durch ein Bildanalyseverfahren mit den Merkmalen des Anspruches 1 gelöst. Vorteilhafte Weiterbildungen sind Gegenstand der hiervon abhängigen Ansprüche.

Gemäß dem Anspruch 1 wird ein Bildanalyseverfahren zur computerimplementierten Bestimmung des Kornaufschlussgrades von Körnern innerhalb eines von Arbeitsaggregaten eines Feldhäckslers bearbeiteten Erntegutstroms, der ganze Körner und zerkleinerte Körner als Kornbestandteile sowie Nicht-Kornbestandteile umfasst, vorgeschlagen, wobei mittels eines Kamerasystems zyklisch Bilder des Erntegutstroms aufgenommen und an eine Bildanalyseeinrichtung zur Auswertung übertragen werden. wobei zumindest ein Arbeitsaggregat in Abhängigkeit vom bestimmten Kornaufschlussgrad angesteuert wird.

Das erfindungsgemäße Bildanalyseverfahren ist dadurch gekennzeichnet, dass zur Bestimmung des Kornaufschlussgrades in den Bildern enthaltene Bildpixel in Kornbestandteile und Nicht-Kornbestandteile durch die Bildanalyseeinrichtung klassifiziert werden, innerhalb der als Kornbestandteile klassifizierten Bildpixel eines aufgenommenen Bildes eine Klassifizierung von ganzen Körnern und zerkleinerten Körnern mittels eines Segmentierungsmodells durchgeführt wird, und dass eine von dem Segmentierungsmodell verwendete Verlustfunktion mit einem einstellbaren Gewichtungsfaktor gewichtet wird.

Dem erfindungsgemäßen Bildanalyseverfahren liegt die Überlegung zugrunde, dass es bei der Erstellung von Trainingsdaten, die durch einen manuellen Annotationsprozess aus Bilddaten gewonnen werden, Nicht-Kornbestandteile wie Maisspindel- oder Maisstängelfragmente oder dergleichen als Körner sowie zerkleinerte Körner identifiziert und klassifiziert werden, was als "Falsch Positive" (False Positive FP) bezeichnet wird, sowie dass Körner und zerkleinerte Körner nicht als solche identifiziert und klassifiziert werden, was als "Falsch Negative" (False Negative FN) bezeichnet wird. Dabei wurde die Erkenntnis gewonnen, dass der Anteil der Falsch Positiv (FP) klassifizierten Körner oder zerkleinerten Körner in der Regel überwiegt, wodurch im Ergebnis die Genauigkeit bei der Bestimmung des Kornaufschlussgrades reduziert wird.

Dieser Einfluss auf die Genauigkeit bei der vorschlagsgemäßen Bestimmung des Kornaufschlussgrades wird dadurch kompensiert, dass eine von dem Segmentierungsmodell verwendete Verlustfunktion mit einem einstellbaren Gewichtungsfaktor gewichtet wird.

Der Gewichtungsfaktor berücksichtigt das Verhältnis von Erkennungsquote und Erkennungsgenauigkeit.

Hierzu kann der der Gewichtungsfaktor auf einen Wert größer 0 und kleiner 1, insbesondere auf einen Wert zwischen 0,2 und 0,5, eingestellt werden. Die Einstellung des Gewichtungsfaktors im vorstehend genannten Bereich führt dazu, dass die Sensitivität, d.h. die Wahrscheinlichkeit, mit der ein positives Objekt korrekt als positiv klassifiziert wird, höher gewichtet wird, als der positive Vorhersagewert, d.h. der Anteil der korrekt als positiv klassifizierten Objekte. Mit einem Gewichtungsfaktor größer 0 und kleiner 1 wird die Sensitivität stärker gewichtet, so dass eher die Kornbestandteile, ganze Körner sowie zerkleinerte Körner, prädiziert werden, bei der eine hohe Wahrscheinlichkeit vorliegt, dass es sich tatsächlich um Kornbestandteile handelt, die der Bestimmung des Kornaufschlussgrades zugrunde gelegt werden. Liegt eine geringere Wahrscheinlichkeit vor, so werden die Partikel eher nicht prädiziert. Hingegen führt ein Wert für den Gewichtungsfaktor größer 1 dazu, dass die Wahrscheinlichkeit zunimmt, dass ein Objekt als positiv klassifiziert wird, wobei es sich dabei um "Richtig Positiv" (True Positive TP), d.h. zutreffend als Körner oder zerkleinerte Körner klassifizierte Kornbestandteile, sowie "Falsch Positiv" (False Positive FP) Objekte handelt, d.h. Nicht-Kornbestandteile werden fälschlich als Körner oder zerkleinerte Körner klassifiziert.

Insbesondere kann als initialer Gewichtungsfaktor ein Gewichtungsfaktor eines vorangehend durchgeführten Ernteprozesses auf dem zu bearbeitenden Feld eingestellt werden. Somit kann auf einen bereits in der Vergangenheit optimierten Gewichtungsfaktor zurückgegriffen werden, der dem Bildanalyseverfahren zugrunde gelegt werden kann. Alternativ kann ein initialer Gewichtungsfaktor im Wertebereich des Anspruches 2 eingestellt werden.

Weiterhin kann der initial eingestellte Gewichtungsfaktor iterativ angepasst werden. Dies kann bevorzugt im Rahmen einer Neugenerierung des Segmentierungsmodells erfolgen. Insbesondere kann die Neugenerierung des Segmentierungsmodells unterjährig oder im Folgejahr durchgeführt werden.

Insbesondere können der Bildanalyseeinrichtung zur Auswertung die Bilder mit einer Auflösung im Bereich zwischen 128 x 128 Pixel bis 1024 x 1024 Pixel als Eingangsdaten von dem Kamerasystem zugeführt werden. Besonders bevorzugt werden Bilder mit einer Auflösung im Bereich zwischen 256 x 256 Pixel bis 512 x 512 Pixel als Eingangsdaten von dem Kamerasystem zugeführt, da eine Bildgröße diesem Bereich eine ausreichende Auflösung aufweist, damit auch kleine Kornbestandteile ausreichend erkennbar dargestellt werden, um deren Merkmale im Training zu lernen und bei der späteren Bildanalyse mit einem hohen Bestimmtheitsmaß prädizieren zu können. Eine höhere Auflösung bei der Aufnahme der Bilder führt hingegen nicht zu einer nennenswerten Verbesserung der Prädiktionsgenauigkeit. Die Erhöhung der Auflösung, die mit einer erhöhten Datenmenge einhergeht, führt zu einer Erhöhung der Inferenzzeit, was sich auf die Auswertungsdauer auswirkt.

Bevorzugt kann der Gewichtungsfaktor in Abhängigkeit von Grenzwerten für Inferenzzeit und erreichbarem Bestimmheitsmaß des Segmentierungsmodells eingestellt werden, wobei der Grenzwert für die Inferenzzeit kleiner 30 ms und der Grenzwert für das Bestimmtheitsmaß größer 70 % ist.

Insbesondere kann das Bildanalyseverfahren durch zumindest ein neuronales Netzwerk durchgeführt wird, welches als Segmentierungsmodell eine U-Net Architektur verwendet. Das Extrahieren charakteristischer Bildmerkmale des Bildes mittels des neuronalen Netzwerkes kann in einem gemeinsamen Merkmaluntermodul erfolgen. Ein Merkmaluntermodul wird dabei auch als Encoder und speziell im vorliegenden Fall als Feature Extractor bezeichnet. Als Feature Extractor wird hier und vorzugsweise das MobileNet verwendet. Insbesondere eine U-Net Architektur, deren Eingangsgröße und Ausgangsgröße jeweils mit 256 x 256 Pixel gewählt ist, zeichnet sich durch eine Inferenzzeit aus, die unterhalb von 30 ms, wobei das geforderte Bestimmtheitsmaß größer 70 % erreicht wird. Hierdurch wird es ermöglicht, das Bildanalyseverfahren auf einer mobilen Hardware eines Feldhäckslers auszuführen, welche sich durch eine geringere Rechenleistung auszeichnet, als eine stationäre Hardware, wie sie beispielsweise auf einer Hofstätte vorhanden sein kann.

Weiter bevorzugt können der Verlustfunktion die mittels des Segmentierungsmodells bestimmten Klassifikationsdaten und die verwendeten Trainingsdaten von ganzen Körnern und zerkleinerten Körnern zugeführt werden, woraus ein Verlustwert bestimmt wird, der in einem Optimierungsschritt zur Anpassung des Gewichtungsfaktors verwendet wird.

Insbesondere kann zur Klassifizierung von ganzen Körnern und zerkleinerten Körnern eine Längenbestimmung einer langen Hauptachse und einer kurzen Hauptachse jedes klassifizierten Kornbestandteils mittels eines Längen-Breiten-Vergleichs durchgeführt werden und zur Berechnung des Kornaufschlussgrades kann der Quotient aus der Summe der Fläche von klassifizierten Kornbestandteilen, die einen adaptiven Grenzwert für die Länge der kurzen Hauptachsen unterschreiten, und der Summe der Fläche aller klassifizierten Kornbestandteile, gebildet werden. Die Verwendung eines, insbesondere dynamisch, adaptiven Grenzwertes, um den Kornaufschlussgrad unter Berücksichtigung von Ernteguteigenschaften zu bestimmen, berücksichtigt die äußeren Einflüsse, die während des Pflanzenwachstums die tatsächliche Korngröße beeinflussen.

Hierzu kann der adaptive Grenzwert automatisch und/oder manuell adaptiert werden.

Bei einer automatischen Anpassung des Grenzwertes ist es denkbar, dass zu Beginn des Ernteprozesses ein hinterlegter oder abrufbarer voreingestellter initialer Wert des Grenzwertes verwendet wird, der im weiteren Verlauf adaptiert wird. Beispielsweise kann im Rahmen der Dokumentation für einen Schlag auf historische Daten zurückgegriffen werden, welche Informationen zu vorangehend angebautem Erntegut und zurückliegenden Ernteprozessen beinhalten.

Eine manuelle Adaption des Grenzwerts kann durch eine Auswahl aus einem vorgegebenen oder vorgebbaren Wertebereich für Werte einer minimalen Korngröße und einer maximalen Korngröße und/oder durch eine Eingabe zumindest eines Wertes einer mittleren Korngröße durchgeführt werden, die für den Ernteprozess Gültigkeit hat. Die manuelle Adaption des Grenzwertes kann durch das Bildanalyseverfahren dahingehend unterstützt werden, dass bei einer signifikanten Abweichung des berechneten die mittlere Korngröße repräsentierendes Mittelwertes vom manuell vorgegebenen Wert ein Hinweis darauf für einen Bediener generiert wird. Bevorzugt kann dieser Hinweis einen Vorschlag für die manuelle Anpassung des Grenzwertes enthalten.

Insbesondere kann der adaptive Grenzwert zyklisch in Intervallen adaptiert werden. Mit zyklisch adaptieren ist das wiederholte Anpassen des adaptiven Grenzwertes innerhalb eines definierbaren Zeitraums und/oder in Abhängigkeit eines definierbaren Erntegutdurchsatzes oder einer definierbaren Fahrstrecke auf einem Feld während des Ernteprozesses gemeint.

Dabei kann aus der Summe der innerhalb des Intervalls bestimmten Fläche ganzer Körner ein die mittlere Korngröße repräsentierender Mittelwert für die sichtbare Fläche gebildet werden, aus welchem der zu adaptierende Grenzwert als Bruchteilwert der langen Hauptachse und/oder der kurzen Hauptachse dynamisch abgeleitet wird. So kann als Bruchteilwert die Hälfte der kurzen und/oder der langen Hauptachse verwendet werden, sodass das Korn als geviertelt angesehen wird. Alternativ sind auch andere Bruchteilwerte, wie Dritteln oder Fünfteln der kurzen und/oder der langen Hauptachse, denkbar. Der auf diese Weise aktualisierte adaptierte Grenzwert wird dem Bildanalyseverfahren zur Bestimmung des Kornaufschlussgrades zugrunde gelegt.

Weiterhin wird die eingangs gestellte Aufgabe durch einen Feldhäcksler mit den Merkmalen des Anspruches 12 gelöst.

Gemäß dem Anspruch 12 wird ein selbstfahrender Feldhäcksler vorgeschlagen, umfassend ein Vorsatzgerät als Arbeitsaggregat zur Aufnahme von Erntegut, Arbeitsaggregate zur Bearbeitung eines aus dem aufgenommen Erntegut erzeugten Erntegutstromes, ein Fahrerassistenzsystem, welches zur Ansteuerung der Arbeitsaggregate ausgeführt und eingerichtet ist, ein Kamerasystem, welches zyklisch Bilder des Erntegutstroms aufnimmt und an eine Bildanalyseeinrichtung, die zur Bildanalyse unter Verwendung des Bildanalyseverfahrens nach einem der Ansprüche 1 bis 11 ausgeführt und eingerichtet ist, überträgt, um einen Kornaufschlussgrad von Körnern im Erntegutstrom zu bestimmen, wobei das Fahrerassistenzsystem zur Ansteuerung eines als Nachzerkleinerungsvorrichtung ausgeführten Arbeitsaggregates in Abhängigkeit vom bestimmten Kornaufschlussgrad ausgeführt und eingerichtet ist.

Auf alle Ausführungen zu dem erfindungsgemäßen Bildanalyseverfahren darf verwiesen werden.

Insbesondere kann die Bildanalyseeinrichtung mit einem Algorithmus zum maschinellen Lernen, welcher als neuronales Netz in Form einer U-Net Architektur eines gefalteten neuronalen Netzwerks (Convolutional Neural Network) oder als rückgekoppeltes neuronales Netzwerk (Recurrent Neural Network) ausgeführt ist, ausgebildet ist.

Bevorzugt kann der Feldhäcksler ein Kamerasystem aufweisen, welches dazu ausgeführt und eingerichtet ist, den von den Arbeitsaggregaten bearbeiteten Erntegutstrom zu erfassen und auszuwerten, wobei das Kamerasystem eine RGB-Kamera, die zur Erfassung des einen Auswurfkrümmer des Feldhäckslers durchströmenden Erntegutstroms eingerichtet ist und in einem an dem Auswurfkrümmer angeordneten Gehäuse angeordnet ist, umfasst, wobei in dem Auswurfkrümmer eine lichtdurchlässige Sichtscheibe angeordnet ist, an welcher der zu detektierende Erntegutstrom vorbeiströmt, sowie zumindest eine der Sichtscheibe gegenüberliegend angeordnete Lichtquelle, deren Lichtstrahlen auf den Erntegutstrom gerichtet sind, zumindest ein Spiegel, welcher von dem Erntegutstrom reflektiertes Licht in ein an der RGB-Kamera angeordnetes Objektiv umlenkt, wobei die RGB-Kamera vom Erntegutstrom aufgenommene Bilder an die Bildanalyseeinrichtung zur Auswertung überträgt.

Besonders bevorzugt kann die RGB-Kamera die Bilder mit einer Bildrate im Bereich von 20 Bildern/Sekunde bis 40 Bildern/Sekunde aufnehmen, dass die Belichtungszeit zwischen 5 Mikrosekunden und 25 Mikrosekunden liegt und dass das Objektiv der RGB-Kamera eine Brennweite zwischen 7 mm und 10 mm aufweisen.

Besonders bevorzugt kann die RGB-Kamera Bilder des Erntegutstroms insbesondere mit einer Bildrate im Bereich von 25 Bildern/Sekunde bis 35 Bildern/Sekunde aufnehmen. Weiter bevorzugt kann die Belichtungszeit insbesondere zwischen 9 Mikrosekunden und 21 Mikrosekunden liegen.

Wesentlich ist die Überlegung, die Ausführung der RGB-Kamera des Kamerasystems sowie die für das Aufnehmen von Bildern durch die RGB-Kamera wesentlichen Parameter an die im Auswurfkrümmer herrschenden Bedingungen, insbesondere die Strömungsgeschwindigkeit des Erntegutstroms nach dem Austritt aus einer Nachzerkleinerungsvorrichtung, welche im Bereich von 15 m/s bis 20 m/s liegt, optimal anzupassen. Hierbei werden die Bilder mit der bevorzugten Auflösung im Bereich zwischen 256 x 256 Pixel bis 512 x 512 Pixel als Eingangsdaten der Bildanalyseeinrichtung, die mit dem Algorithmus zum maschinellen Lernen, der als neuronales Netz in Form einer U-Net Architektur eines gefalteten neuronalen Netzwerks (Convolutional Neural Network) oder als rückgekoppeltes neuronales Netzwerk (Recurrent Neural Network) ausgeführt ist, von dem Kamerasystem zugeführt.

Mit der erfindungsgemäßen Ausführung und vorschlagsgemäßen Parametrisierung der RGB-Kamera lässt sich ein Bildanalyseverfahren zur computerimplementierten Bestimmung des Kornaufschlussgrades von Körnern innerhalb des von Arbeitsaggregaten des Feldhäckslers bearbeiteten Erntegutstroms mittels der Bildanalyseeinrichtung des Kamerasystems durchführen, welches mit der hierfür erforderlichen Genauigkeit die Unterscheidung von Kornbestandteilen und Nichtkornbestandteilen und darauf basierend die Differenzierung zwischen ganzen Körnern und zerkleinerten Körnern durch optisches Sieben ermöglicht. Die erforderliche Genauigkeit der Unterscheidung von Kornbestandteilen und Nichtkornbestandteilen sowie die Differenzierung zwischen ganzen Körnern und zerkleinerten Körnern durch das Bildanalyseverfahren basiert auf einem vorgegebenen Bestimmtheitsmaß.

Die vorliegende Erfindung wird nachstehend anhand eines in den Zeichnungen dargestellten Ausführungsbeispieles näher erläutert.

Es zeigen:

Fig. 1 schematisch und exemplarisch einen Feldhäcksler;

Fig. 2 schematisch und exemplarisch eine vereinfachte Darstellung eines Kamerasystems;

Fig. 3 schematisch und exemplarisch ein vom Kamerasystem aufgenommenes Bild von gehäckseltem Erntegut;

Fig. 4 schematisch und exemplarisch ein Binärbild des durch ein Bildanalyseverfahren analysierten Bildes gemäß Fig. 3;

Fig. 5 schematisch und exemplarisch einen vergrößerten Ausschnitt des Binärbildes gemäß Fig. 4;

Fig. 6 schematisch und exemplarisch eine Auswertung des Binärbildes gemäß Fig. 5;

Fig. 7 schematisch und exemplarisch eine Visualisierung von ganzen Körnern und zerkleinerten Körnern in einem durch das Kamerasystem aufgenommenen Bild des gehäckselten Erntegutes;

Fig. 8 schematisch und exemplarisch eine Pixelmaske des durch das Bildanalyseverfahren analysierten Bildes gemäß Fig. 7;

Fig. 9 exemplarisch ein Diagramm, in welchem ein Verlauf für ein Bestimmtheitsmaß sowie ein Verlauf für eine detektierte Anzahl an Kornbestandteilen über einen Gewichtungsfaktor dargestellt sind; und

Fig. 10 ein vereinfachtes Flussdiagramm des erfindungsgemäßen Bildanalyseverfahren.

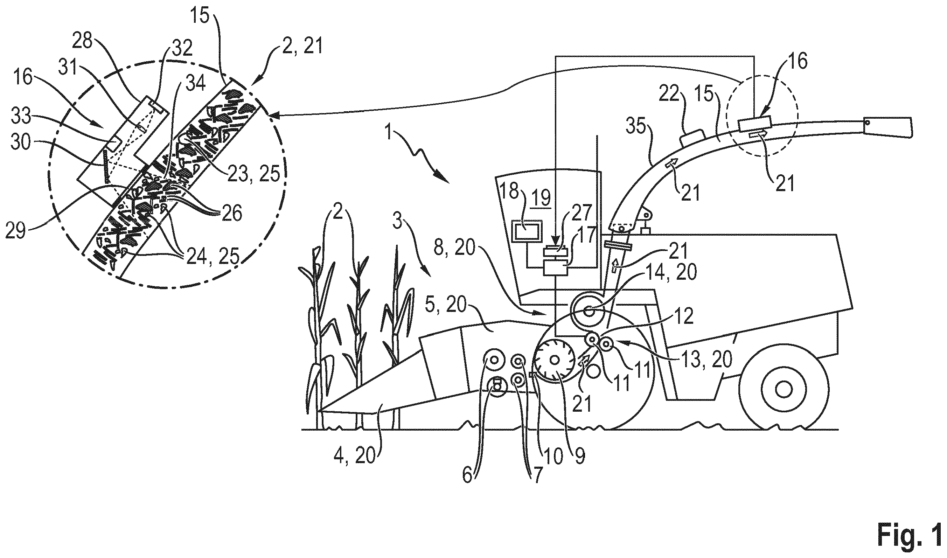

Fig. 1 zeigt schematisch und exemplarisch einen erfindungsgemäßen Feldhäcksler 1 beim Abernten eines Bestandes von Pflanzen, insbesondere Maispflanzen 2, auf einem Feld. Eine Aufnahmevorrichtung 3 des Feldhäckslers 1 umfasst in an sich bekannter Weise ein in Anpassung an das zu erntende Pflanzenmaterial austauschbares Vorsatzgerät 4 und eine Einzugseinrichtung 5 mit mehreren Walzenpaaren 6, 7, die das Erntegut von dem Vorsatzgerät 4 übernimmt, um es einer Häckselvorrichtung 8 zuzuführen.

Die Häckselvorrichtung 8 umfasst eine drehangetriebene Häckseltrommel 9, eine Gegenschneide 10, über welche die Maispflanzen 2 von dem benachbarten Walzenpaar 7 der Einzugseinrichtung 5 hindurch geschoben werden, um durch Zusammenwirken der Gegenschneide 10 mit der Häckseltrommel 9 zerkleinert zu werden. Der Häckselvorrichtung 8 ist eine Nachzerkleinerungsvorrichtung 13, auch als Corn-Cracker bezeichnet, mit einem Paar von Konditionier- oder Crackerwalzen 11, die einen Spalt 12 von verstellbarer Breite, im Folgenden auch als Crackerspalt bezeichnet, begrenzen und mit unterschiedlichen Geschwindigkeiten rotieren, um in dem durch den Spalt 12 hindurchtretenden Materialstrom enthaltene Maiskörner zu zerkleinern, nachgeordnet. Ein Nachbeschleuniger 14 verleiht dem zerkleinerten und in der Nachzerkleinerungsvorrichtung 13 konditionierten Erntegut, hier den Maispflanzen 2, die notwendige Geschwindigkeit, um einen Auswurfkrümmer 15 zu durchlaufen und in ein (nicht dargestelltes) Begleitfahrzeug übergeladen zu werden. Der Auswurfkrümmer 15 weist über seine Längserstreckung einen im Wesentlichen rechteckförmigen Querschnitt auf. Der Auswurfkrümmer 15 weist eine durchgehende geschlossene Oberseite 35 und eine abschnittsweise offen ausgeführte Unterseite auf. Orthogonal zur Oberseite 35 des Auswurfkrümmers 15 sind Seitenwände angeordnet, welche einen durch den Auswurfkrümmer 15 hindurch geförderten Erntegutstrom 21 (durch Pfeile veranschaulicht) seitlich begrenzen und führen.

An dem Auswurfkrümmer 15 ist zumindest ein Kamerasystem 16 angeordnet, um Bilder 44 des durch den Auswurfkrümmer 15 hindurch geförderten Erntegutstroms 21 zu erzeugen. Weiterhin kann auf dem Auswurfkrümmer 15 ein NIR-Sensor 22 angeordnet sein. Mittels des NIR-Sensors 22 lassen sich Ernteguteigenschaften bestimmen. Der NIR-Sensor 22 ist hier und bevorzugt dem Kamerasystem 16 vorgeordnet auf der Oberseite des Auswurfkrümmers 16 positioniert.

Das Vorsatzgerät 4, die Einzugsvorrichtung 5, die Häckselvorrichtung 8, die Nachzerkleinerungsvorrichtung 13 sowie der Nachbeschleuniger 14 und deren jeweilige Komponenten sind Arbeitsaggregate 20 des Feldhäckslers 1, die dem Abernten der Maispflanzen 2 eines Feldbestandes und/oder der Bearbeitung der Maispflanzen 2 des Feldbestandes im Rahmen des Ernteprozesses dienen.

Innerhalb des von den Arbeitsaggregaten 20 des Feldhäckslers 1 bearbeiteten Erntegutstroms 21 befinden sich ganze Körner 23 und zerkleinerte Körner 24 als Kornbestandteile 25 sowie Nicht-Kornbestandteile 26, wie Stängel, Blätter und dergleichen.

Das Kamerasystem 16 weist eine RGB-Kamera 32 zur Aufnahme von Bilddaten des im Erntegutstrom 21 enthaltenen Ernteguts auf. Die RGB-Kamera 32 nimmt ortsaufgelöst Bilddaten auf. Der Begriff "ortsaufgelöst" bedeutet hier, dass es in den Bilddaten möglich ist, Einzelheiten des Ernteguts zu unterscheiden. Die RGB-Kamera 32 weist also zumindest genügend Pixel auf, um die vorschlagsgemäße, noch zu erläuternde Bildanalyse zu ermöglichen. Das Kamerasystem 16 erfasst in einer Messroutine mittels der RGB-Kamera 32 Bilddaten des Ernteguts im Erntegutstrom 21, hier der zerkleinerten Maispflanzen 2. Diese Messroutine wird entsprechend während des Betriebs des Feldhäckslers 1 durchgeführt.

Die von dem Kamerasystem 16 generierten Bilder werden an eine Bildanalyseeinrichtung 27 übertragen und von dieser ausgewertet.

Die Bildanalyseeinrichtung 27 ist mit einem Fahrerassistenzsystems 17 verbunden oder kann als Bestandteil des Fahrerassistenzsystems 17 ausgeführt sein. Das Fahrerassistenzsystem 17 kann mit einer Eingabe-Ausgabe-Einheit 18 in einer Fahrerkabine 19 des Feldhäckslers 1 verbunden sein, um Auswertungsergebnisse darauf auszugeben. Das Fahrerassistenzsystem 17 steuert zumindest ein Stellglied zum Einstellen der Spaltweite des Crackerspalts 12 und/oder der Differenzdrehzahl und/oder der Drehzahlniveaus der Walzen 11 der Nachzerkleinerungsvorrichtung 13 an.

Die Walzen 11 der Nachzerkleinerungsvorrichtung 13 rotieren im Betrieb mit jeweils einer als Parameter einstellbaren Drehzahl, wobei zwischen den Walzen der Spalt 12 mit einer als Parameter einstellbaren Spaltbreite verbleibt. Des Weiteren weisen die Walzen 11 eine als Parameter einstellbare Drehzahldifferenz auf, um die sich die Drehzahlen der Walzen 11 unterscheiden. Zumindest einen der Parameter steuert das Fahrerassistenzsystem 17 in Abhängigkeit von einem zu bestimmenden Kornaufschlussgrad $CSPS_{opt}$ an.

Hintergrund der Ansteuerung der Nachzerkleinerungsvorrichtung 13 in Abhängigkeit vom Kornaufschlussgrad ist, dass es besonders bei der Verwendung des Ernteguts als Futtermittel für Tiere und bei der Verwendung in Biogasanlagen wichtig ist, dass die Kornbestandteile 25 des Ernteguts aufgeschlossen, also zerkleinert, werden. Wichtig ist das Aufschließen der Kornbestandteile 25, damit die darin enthaltene Stärke zugänglich wird und nicht durch die Hülle des Kornbestandteils 25 geschützt wird. Das Aufschließen der Kornbestandteile 25 geschieht einerseits durch das Häckseln des Ernteguts und andererseits wesentlich durch die Nachzerkleinerungsvorrichtung 13. Die Nachzerkleinerungsvorrichtung 13 kann zwar so eingestellt werden, dass mit Sicherheit alle im Erntegutstrom 21 enthaltenen Kornbestandteile 25 zerkleinert sind, was mit einem erhöhten Verbrauch an Energie bzw. Kraftstoff einhergeht. So könnte, um eine maximale Zerkleinerung und somit eine hohe Aufbereitungsqualität der Kornbestandteile 25 zu erreichen, die Spaltbreite minimal eingestellt werden. Diese unnötig hohe verbrauchte Energie kann damit nicht in eine Steigerung der Fahrgeschwindigkeit umgesetzt werden, so dass sich systemimmanent eine entsprechend geminderte Flächenleistung ergibt.

Nachstehend wird das vorschlagsgemäße Verfahren zur computerimplementierten Bestimmung des Kornauf-schlussgrades $CSPS_{opt}$ der Körner 23 erläutert. Hierzu werden mittels der optischen Erfassungseinrichtung 16 zyklisch aufgenommene Bilder 28 des Erntegutstroms 21 an die Bildanalyseeinrichtung 27 zur Auswertung mittels eines Bildanalyseverfahrens übertragen.

Das schematisch dargestellte Kamerasystem 16 weist neben der RGB-Kamera 32 eine Optik auf. Die Optik umfasst einen Spiegel 30, ein an der RGB-Kamera 32 angeordnetes Objektiv 31 und zumindest eine Lichtquelle 33. Die RGB-Kamera 32 weist ein Sichtfeld 34 auf, in dem sie vom Erntegutstrom 21 reflektiertes Licht detektieren kann. Die RGB-Kamera 32 und die Optik sind in einem Gehäuse 28 des Kamerasystems 16 angeordnet, welches auf der Oberseite des Auswurfkrümmers 15 befestigt ist. Auf der dem Auswurfkrümmer 15 zugewandten Seite des Gehäuses 28 ist eine lichtdurchlässige Sichtscheibe 29 angeordnet. Die Sichtscheibe 29 besteht hier und vorzugsweise aus Saphirglas. Die Sichtscheibe 29 kann rund oder polygonal ausgeführt sein.

Das auf der Oberseite des Auswurfkrümmers 15 angeordnete Gehäuse 28 des Kamerasystems 16 ist, bezogen auf die Längserstreckung des Auswurfkrümmers 15, in dessen zweiter Hälfte angeordnet. Das Gehäuse 28 ist mittels zweier Montagevorrichtungen 36 auf der Oberseite 35 des Auswurfkrümmers 15 lösbar befestigt.

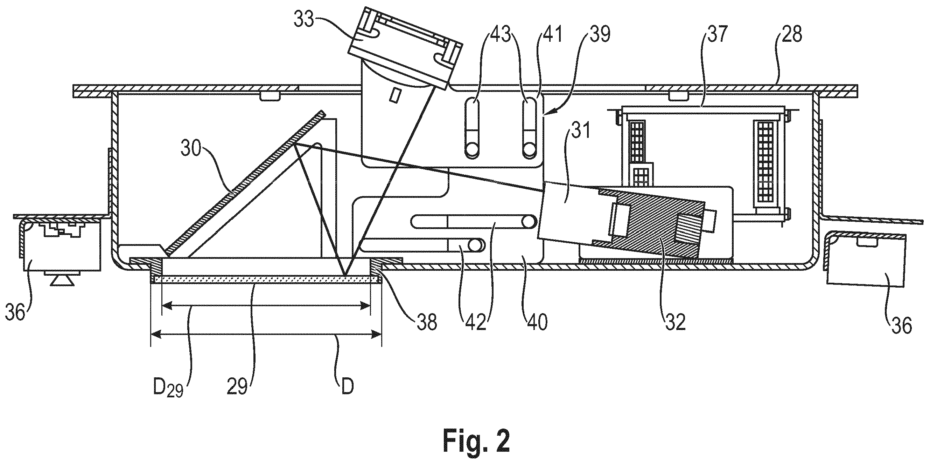

Fig. 2 zeigt schematisch und exemplarisch eine vereinfachte Darstellung des Kamerasystems 16. In der Oberseite 35 des Auswurfkrümmers 15 ist eine Öffnung vorgesehen, in welche die Sichtscheibe 29 bündig mit der dem Erntegutstrom 21 zugewandten Oberfläche der Oberseite 35 des Auswurfkrümmers 15 abschließend eingelassen ist.

Hier und vorzugsweise sind die Sichtscheibe 29 und die Öffnung im Wesentlichen kreisförmig ausgeführt. Alternativ können die Sichtscheibe 29 und die Öffnung polygonal ausgeführt sein. Die Sichtscheibe 29 kann in eine im Wesentlichen ringförmige Halterung 38 eingeklebt sein. Die Halterung 38 ist im Gehäuse 28 befestigt. Die Halterung 38 kann lösbar am Gehäuse 28 befestigt sein.

Die Sichtscheibe 29 weist einen durch das Objektiv 31 erfassbaren sichtbaren Durchmesser $D_{29}$ auf, der größer als 7 cm und kleiner als 13 cm ist. Besonders bevorzugt kann die Sichtscheibe 29 einen erfassbaren sichtbaren Durchmesser $D_{29}$ aufweisen, der größer oder gleich 9 cm und kleiner oder gleich 12 cm ist. Mit D ist ein Gesamtdurchmesser der im dargestellten Ausführungsbespiel rund ausgeführten Sichtscheibe 29 bezeichnet, der einen Randbereich zwischen 2 mm und 4 mm enthält, welcher der Auflage auf der Halterung 38 dient.

Bei einer polygonalen Ausführung der Sichtscheibe 29, einer zumindest viereckigen Ausführung, wird der durch das Objektiv 31 erfassbare sichtbare Durchmesser $D_{29}$ durch die jeweilige die Kantenlänge berücksichtigt.

Bei der in die Halterung 38 geklebten Anordnung der Sichtscheibe 29 findet die dafür notwendige randseitige Auflagefläche beim durch das Objektiv 31 erfassbaren sichtbaren Durchmesser $D_{29}$ der Sichtscheibe 29 Berücksichtigung, welcher bei der Aufnahme des Erntegutstroms wirksam ist. Der durch das Objektiv 31 erfassbare sichtbare Durchmesser $D_{29}$ der Sichtscheibe 29 begrenzt das Sichtfeld 34.

Bevorzugt kann die Stärke der Sichtscheibe 29 im Bereich zwischen 2 mm und 4 mm liegen. Die Stärke der Sichtscheibe 29 hängt dabei im Wesentlichen vom Gesamtdurchmesser D respektive den Kantenlängen bei einer polygonalen Ausführung der Sichtscheibe 29 ab.

Die RGB-Kamera 32 nimmt Bilder des Erntegutstroms 21 mit einer Bildrate im Bereich von 20 Bildern/Sekunde bis 40 Bildern/Sekunde auf. Besonders bevorzugt liegt die Bildrate im Bereich von 25 Bildern/Sekunde bis 35 Bildern/Sekunde. Die Belichtungszeit liegt hier und vorzugsweise zwischen 5 Mikrosekunden und 25 Mikrosekunden. Besonders bevorzugt liegt die Belichtungszeit im Bereich zwischen 9 Mikrosekunden und 20 Mikrosekunden Das Objektiv 31 der RGB-Kamera 32 weist eine Brennweite zwischen 7 mm und 10 mm auf. Weiterhin weist das Objektiv 31 hier und vorzugsweise einen Bildwinkel im Bereich von 32° bis 37° auf. Besonders bevorzugt kann das Objektiv 31 einen Bildwinkel im Bereich von 34° bis 35° aufweisen.

Durch den zumindest einen Spiegel 30 im Gehäuse 28 ergibt sich eine Gegenstandsweite im Bereich von 175 mm bis 195 mm. Insbesondere sind die Abmessungen des Spiegels 30 derart gewählt, dass der Bildwinkel des Objektivs 31 berücksichtigt wird und das gesamte Sichtfenster der Sichtscheibe 29, welches dem lichtdurchlässigen Durchmesser $D_{29}$ entspricht, visualisiert werden kann. Die Realisierung der Gegenstandsweite im Bereich von 175 mm bis 195 mm wird mittels des zumindest einen Spiegels 30 realisiert, sodass eine Überschreitung der maximal zulässigen Höhe aufgrund der Bauhöhe des Gehäuses auf dem Auswurfkrümmer 15 im Straßenverkehr vermieden wird. Durch die Verwendung der Brennweite zwischen 7 mm und 10 mm bei einer Gegenstandsweite im Bereich von 175 mm bis 195 mm können unerwünschte Artefakte wie Bildkrümmungen vermieden werden, die bei kürzeren Brennweiten und zugleich niedrigeren Gegenstandsweiten zu erwarten sind. Besonders bevorzugt kann die Gegenstandsweite im Bereich von 180 mm bis 190 mm liegen.

Das Kamerasystem kann eine Steuereinheit 37 zur Ansteuerung der zumindest einen Lichtquelle 33 aufweisen. Die Steuereinheit 37 zur Ansteuerung der zumindest einen Lichtquelle 33 kann bevorzugt im Gehäuse 28 angeordnet sein. Als Lichtquelle 33 wird bevorzugt zumindest ein Matrix-LED-Scheinwerfer verwendet.

Die Position der zumindest einen Lichtquelle 33 im Gehäuse 28 kann gegenüber der Sichtscheibe 29 und dem Spiegel 30 in vertikaler Richtung und/oder in horizontaler Richtung verstellbar sein. Hierzu kann die Lichtquelle 33 mittels einer Haltevorrichtung 39 im Gehäuse 28 angeordnet sein, die gegenüber dem Gehäuse 28 relativbewegliche Komponenten aufweist. Hierdurch wird eine Kalibrierung und Feinjustierung ermöglicht.

Im dargestellten Ausführungsbeispiel umfasst die Haltevorrichtung 39 im Wesentlichen L-förmige Bleche 40, 41 als relativbewegliche Komponenten, die paarweise angeordnet sind. Jeweils ein Paar der im Wesentlichen L-förmigen Halteelemente 40, 41 ist auf einer Seite der Lichtquelle 33 angeordnet. Die sich abschnittsweise in Längsrichtung des Gehäuses 28 erstreckenden Halteelemente 40 weisen waagerecht verlaufende, parallel zueinander angeordnete Langlöcher 42 auf, innerhalb der die Halteelemente 40 gegenüber dem Gehäuse 28 verschiebbar sind. Die Halteelemente 41 weisen vertikal verlaufende, parallel zueinander angeordnete Langlöcher 43 auf, innerhalb derer die Halteelemente 41 gegenüber den Halteelementen 40 respektive dem Gehäuse 28 verschiebbar sind.

Der Abstand der zumindest einen Lichtquelle 33 zum Mittelpunkt der Sichtscheibe 29 beträgt hier und vorzugsweise zwischen 120 mm und 130 mm. Die zumindest einen Lichtquelle 33 ist hier und vorzugsweise unter einem Winkel zwischen 31° und 34° zur Oberfläche der Sichtscheibe 29 geneigt angeordnet.

Zusätzlich kann auch die RGB-Kamera mit dem daran angeordneten Objektiv 31 in vertikaler Richtung und/oder in horizontaler Richtung und/oder ihrer Neigung verstellbar sein.

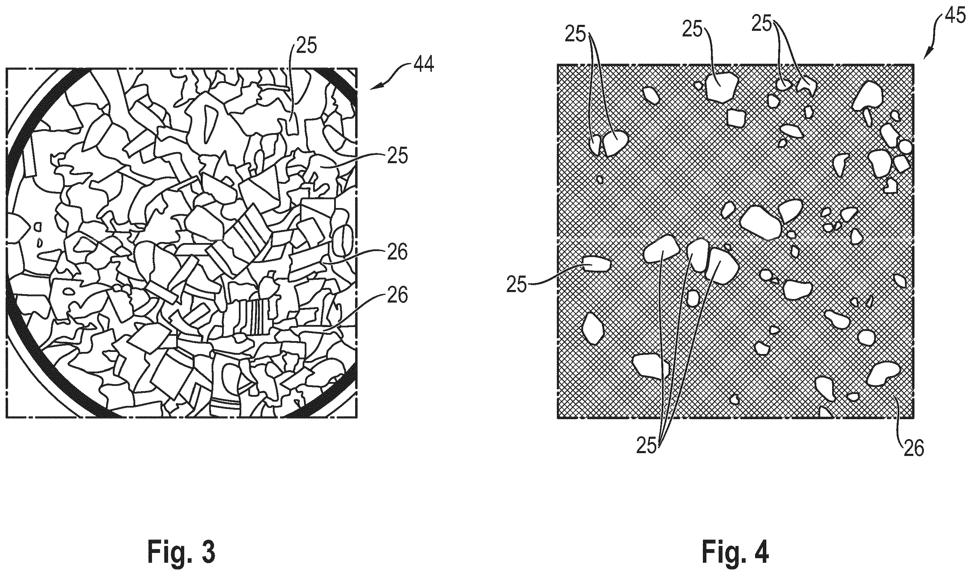

In Fig. 3 ist schematisch und exemplarisch ein von dem Kamerasystem 16 aufgenommenes Bild 44 von gehäckseltem Erntegut, hier der Maispflanze 2, dargestellt. In dem von dem Kamerasystem 16 aufgenommenen Bild 44 sind die Kornbestandteile 25 sowie Nicht-Kornbestandteile 26 der gehäckselten Maispflanze 2 sichtbar. Das Erkennen von Kornbestandteile 25 und das Unterscheiden von ganzen Körnern 23 von zerkleinerten Körnern 24 ist anhand eines solchen Bildes 44 nur sehr eingeschränkt möglich.

In Fig. 4 ist schematisch und exemplarisch ein Binärbild 45 des durch ein Bildanalyseverfahren verarbeiteten Bildes 44 gemäß Fig. 3 dargestellt. Das durch semantische Segmentierung generierte Binärbild 45 zeigt nur Kornbestandteile 25, während alle in Bild 44 sichtbaren Nicht-Kornbestandteile 26 nicht dargestellt werden. Hierzu können die detektierten Kornbestandteile 25 z.B. in weiß dargestellt werden, während die detektierten Nicht-Kornbestandteile 26 einheitlich, beispielsweise in schwarz, dargestellt werden, so dass die detektierten Nicht-Kornbestandteile 26 einen einheitlichen Hintergrund der Visualisierung im Binärbild 45 bilden.

In einer ersten Stufe des Bildanalyseverfahrens werden in den von dem Kamerasystem 16 aufgenommenen Bildern 44 enthaltene Bildpixel in Kornbestandteile 25 und Nicht-Kornbestandteile 26 klassifiziert. Dies kann hier und vorzugsweise mittels semantischer Bildsegmentierung durchgeführt werden. Andere computerimplementierte Verfahren des computerbasierten Sehens, die zur Bildanalyse zur Anwendung kommen können, sind beispielsweise die Objekterkennung oder die Instanz-Segmentierung.

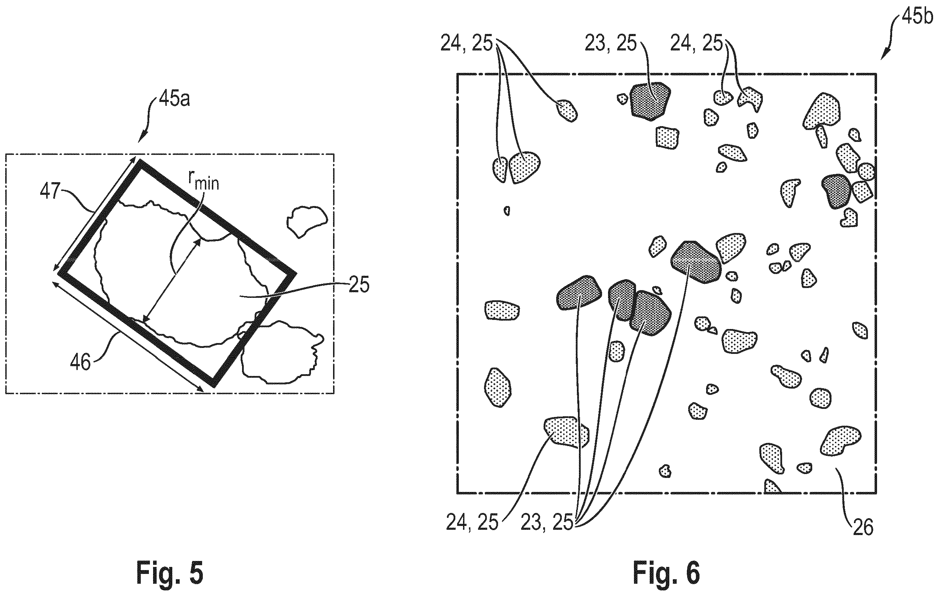

In einer zweiten Stufe des Bildanalyseverfahrens wird eine Längenbestimmung einer langen Hauptachse 46 und einer kurzen Hauptachse 47 jedes klassifizierten Kornbestandteils 25 mittels eines Längen-Breiten-Vergleichs durchgeführt, wie in Fig. 5 exemplarisch dargestellt.

Fig. 5 zeigt schematisch und exemplarisch einen vergrößerten Ausschnitt 45a des Binärbildes 45 gemäß Fig. 4. Der dabei ermittelte größte Wert $r_{min}$ für die Länge der kurzen Hauptachse 47 eines jeden Kornbestandteils 25 wird dem weiteren Bildanalyseverfahren zugrunde gelegt.

Die Durchführung der ersten Stufe und der zweiten Stufe des Bildanalyseverfahrens erfolgt durch zumindest ein neuronales Netzwerk. Das zumindest eine neuronale Netzwerk ist Bestandteil der Bildanalyseeinrichtung 27. Das zumindest eine neuronale Netzwerk verwendet hier und vorzugsweise als Segmentierungsmodell eine U-Net Architektur. Das Extrahieren charakteristischer Bildmerkmale des Bildes mittels des zumindest einen neuronalen Netzwerkes kann in einem gemeinsamen Merkmaluntermodul erfolgen. Ein Merkmaluntermodul wird dabei auch als Encoder und speziell im vorliegenden Fall als Feature Extractor bezeichnet. Als Feature Extractor wird hier und vorzugsweise das MobileNet verwendet.

Das Bestimmen der langen Hauptachse 46 und der kurzen Hauptachse 47 jedes klassifizierten Kornbestandteils 25 zur Flächenbestimmung wird zyklisch in zeitlich beabstandeten Intervallen durchgeführt.

In Fig. 6 ist schematisch und exemplarisch eine erweiterte Auswertung des Binärbildes 45 gemäß Fig. 4 dargestellt. Durch eine Mehrklassen-Klassifikation mittels semantischer Bildsegmentierung kann ein Bild 45b generiert werden, in welchem zwischen den ganzen Körnern 23 als einer Klasse der Mehrklassen-Klassifikation und den zerkleinerten Körnern 24 als einer weiteren Klasse Mehrklassen-Klassifikation unterschieden wird.

Die Mehrklassen-Klassifikation kann gemäß dem erfindungsgemäßen Verfahren dazu herangezogen werden, um eine mittlere Korngröße zu bestimmen. Dies ist vor dem Hintergrund zusehen, dass Maispflanzen 2 aus unterschiedlichen Regionen und/oder Erntejahren voneinander abweichende mittlere Korngrößen aufweisen, was Einfluss auf die Bestimmung des Kornaufschlussgrades hat.

Das Bildanalyseverfahren beginnt mit der Aufnahme des Bildes 44 durch das Kamerasystem 16, welches an die Bildanalyseeinrichtung 27 übertragen wird. Nachfolgend wird das Bild 44 mittels semantischer Segmentierung klassifiziert, um das Binärbild 45 zu generieren. Anhand der in dem jeweiligen Bild 44 enthaltenen Bildpixel werden die Kornbestandteile 25 und Nicht-Kornbestandteile 26 klassifiziert. Das so erzeugte mit dem Bild 44 korrespondierende Binärbild 45 enthält nur noch Informationen über die Kornbestandteile 25.

Daraufhin wird die Längenbestimmung der langen Hauptachse 46 und der kurzen Hauptachse 47 jedes klassifizierten Kornbestandteils 25 mittels des Längen-Breiten-Vergleichs durchgeführt. Mittels der Binarisierung lässt sich aus den so bestimmten Kornbestandteilen 25 zum einen die sichtbare Oberfläche des jeweiligen Kornbestandteiles 25 über die reine Pixelanzahl bestimmen und zum anderen die Längenbestimmung der langen Hauptachse 46 und der kurzen Hauptachse 47 durchführen. Die Berechnung des Kornaufschlussgrades $CSPS_{opt}$ auf Grundlage der Bildauswertung wird allgemein gemäß der nachstehenden Formel [1] durchgeführt.

$$CSPS_{opt} = \frac{\sum A_{KB}(r_{47} < r_{min})}{A_{KBG}} \quad [1].$$

In dieser Formel bezeichnen $CSPS_{opt}$ den durch optisches Sieben bestimmten Kornaufschlussgrad, $r_{min}$ einen Grenzwert für die maximale Länge der kurzen Hauptachse 47 der detektieren Kornbestandteile 25, $A_{KB}$ die sichtbare Fläche von Kornbestandteilen 25, deren Länge der kurzen Hauptachse 47 kleiner als der Grenzwert $r_{min}$ ist, und $A_{KBG}$ die sichtbare Fläche aller detektierten Kornbestandteile 25. Der Grenzwert $r_{min}$ entspricht dabei einer Sieböffnungsweite eines optischen Siebes. Passieren Kornbestandteile 25 diese optische Sieböffnungsweite, d.h. unterschreitet eine maximale Länge $r_{47}$ der kurzen Hauptachse 47 eines Kornbestandteils 25 den Grenzwert $r_{min}$, so entspricht das detektierte Kornbestandteil 25 einem zerkleinerten Korn 24. Der Grenzwert $r_{min}$ kann dem bei Laboruntersuchungen gemäß dem Stand der Technik zugrundeliegenden Grenzwert von 4,75 mm entsprechen.

Um während des durchzuführenden Ernteprozesses auf Schwankungen bei der tatsächlichen Korngröße reagieren zu können, wird die Berechnung des Kornaufschlussgrades $CSPS_{opt}$ gemäß der nachstehenden Formel [2] durchgeführt.

$$CSPS_{opt} = \frac{\sum A_{KB}(r_{47} < r_{adapt})}{A_{KBG}} \quad [2].$$

Mit $r_{adapt}$ ist hier ein adaptiver Grenzwert für die maximale Länge $r_{47}$ der kurzen Hauptachse 47 bezeichnet, dessen überschreiten den jeweiligen Kornbestandteil 25 als ganzes Korn 23 klassifiziert und dessen unterschreiten den jeweiligen Kornbestandteil 25 als zerkleinertes Korn 24 klassifiziert.

Der adaptive Grenzwert $r_{adapt}$ wird im Verlauf eines Ernteprozesses nicht konstant gehalten, sondern zyklisch angepasst, um auf Schwankungen bei der tatsächlichen Korngröße reagieren zu können.

Die Verwendung des, insbesondere dynamisch, adaptierten Grenzwertes $r_{adapt}$, um den adaptiven Kornaufschlussgrad $CSPS_{opt}$ unter Berücksichtigung von sich ändernden Ernteguteigenschaften zu bestimmen, berücksichtigt die äußeren Einflüsse, die während des Pflanzenwachstums die tatsächliche Korngröße beeinflussen. Somit lässt sich der Kornaufschlussgrad $CSPS_{opt}$ dynamisch an die tatsächlichen Erntebedingungen anpassen, was sich auf die Ansteuerung von Arbeitsaggregaten 20, insbesondere der Nachzerkleinerungsvorrichtung 13, des Feldhäckslers 1 vorteilhaft auswirkt.

Bevorzugt kann der adaptive Grenzwert $r_{adapt}$ zyklisch in Intervallen adaptiert werden. Mit zyklisch adaptieren ist das wiederholte Anpassen des Grenzwertes $r_{adapt}$ innerhalb eines definierbaren Zeitraums und/oder in Abhängigkeit eines definierbaren Erntegutdurchsatzes oder einer definierbaren Fahrstrecke auf einem Feld während des durchzuführenden Ernteprozesses gemeint. Hierzu wird die Mehrklassen-Klassifizierung durchgeführt, wie sie weiter oben unter Bezugnahme auf Fig. 6 beschrieben wurde. Mittels der Mehrklassen-Klassifizierung wird weiter zwischen den ganzen Körnern 23 und den zerkleinerten Körnern 24 als Kornbestandteile 25 unterschieden.

Die durchgeführte Längenbestimmung der langen Hauptachse 46 und der kurzen Hauptachse 47 jedes klassifizierten ganzen Korns 23 als Kornbestandteil 25 wird nachfolgend ausgewertet. Dabei wird aus der Summe der innerhalb des insbesondere zeitlichen Intervalls bestimmten Fläche $A_{KB}$ ganzer Körner 23 ein die mittlere Fläche der ganzen Körner 23 repräsentierender Mittelwert $A_{mKB}$ gebildet wird. Dieser Mittelwert $A_{mKB}$ wird als Kriterium für die mittlere Korngröße herangezogen. Über die Polygone der als "ganzes Korn 23" klassifizierten Kornbestandteile 25 kann mittels der bestimmten kurzen Hauptachse 47 und langen Hauptachse 46 des ganzen Korns 23 die mittlere Korngröße bestimmt werden. Dabei lässt sich ein Trägheitsfaktor, die zeitlich beabstandeten Intervalle, in den Verfahrensablauf implementieren, sodass die mittels Längen-Breiten-Vergleichs bestimmte mittlere Korngröße nur innerhalb eines ausgewählten Zeitfensters, bezogen auf alle in dem Intervall detektierten ganzen Körner 23, aktualisiert wird.

$$A_{mKB} = \frac{\sum A_{KB}}{B} \qquad [3].$$

Der aus der mittleren Fläche der ganzen Körner 23 gebildete Mittelwert $A_{mKB}$ steht stellvertretend für die tatsächliche Korngröße des verarbeiteten Erntegutes. Aus dem Mittelwert $A_{mKB}$ wird dann der adaptive Grenzwert $r_{adapt}$ als Bruchteilwert B der langen Hauptachse 46 und/oder der kurzen Hauptachse 47 dynamisch abgeleitet (vgl. Formel [4]).

$$r_{adapt} = \frac{A_{mKB}}{B} \qquad [4].$$

Hierzu wird der berechnete adaptive Grenzwert $r_{adapt}$ als Quotient aus Mittelwert $A_{mKB}$ und dem Bruchteilwert B gebildet. Als Bruchteilwert kann die Hälfte der kurzen Hauptachse 47 und/oder der langen Hauptachse 46 verwendet werden, sodass der verarbeitete Kornbestandteil 25 als geviertelt angesehen wird. Alternativ sind auch andere Bruchteilwerte B, wie Dritteln oder Fünfteln der kurzen Hauptachse 47 und/oder der langen Hauptachse 46, denkbar.

Anschließend wird durch Vergleich des in einem vorangehenden Intervall verwendeten Grenzwertes $r_{adapt}$ mit dem im vorangehenden Schritt berechneten adaptiven Grenzwert $r_{adapt}$ verglichen. Bei einer Abweichung wird bei der Durchführung der Berechnung im zuvor berechnete Grenzwert $r_{adapt}$ verwendet. Der adaptive Grenzwert $r_{adapt}$ kann automatisch und/oder manuell adaptiert werden.

Die Nachzerkleinerungsvorrichtung 13 und das Fahrerassistenzsystem 17 bilden einen Prozessaggregatautomaten. Der Prozessaggregatautomat ist dazu ausgeführt und eingerichtet ist, die Parameter zur Ansteuerung der Nachzerkleinerungsvorrichtung 13 in Abhängigkeit vom bestimmten Kornaufschlussgrad $CSPS_{opt}$ zu optimieren und die optimierten Parameter der Nachzerkleinerungsvorrichtung 13 vorzugeben.

Hierzu wird der ermittelte Wert für den Kornaufschlussgrad $CSPS_{opt}$ an das Fahrerassistenzsystem 17 übertragen. Das Fahrerassistenzsystem 17 verwendet den verfahrensgemäß bestimmten Wert für den Kornaufschlussgrad $CSPS_{opt}$ zur Ansteuerung zumindest der Nachzerkleinerungsvorrichtung 13 in Abhängigkeit von diesem. Der von der Nachzerkleinerungsvorrichtung 13 und dem Fahrerassistenzsystem 17 gebildete Prozessaggregatautomat ist dazu ausgeführt und eingerichtet ist, zumindest einen der Parameter der Nachzerkleinerungsvorrichtung 13 in Abhängigkeit von dem bestimmten Kornaufschlussgrad $CSPS_{opt}$ zu optimieren und der Nachzerkleinerungsvorrichtung 13 vorzugeben. Hierdurch lassen sich die Effizienz sowie die Qualität des Häckselprozesses verbessern.

Der Bildanalyseeinrichtung 27 werden zur fortlaufenden Auswertung durch das Bildanalyseverfahren die Bilder 44 mit einer Auflösung im Bereich zwischen 128 x 128 Pixel bis 512 x 512 Pixel als Eingangsdaten von dem Kamerasystem 16 zugeführt.

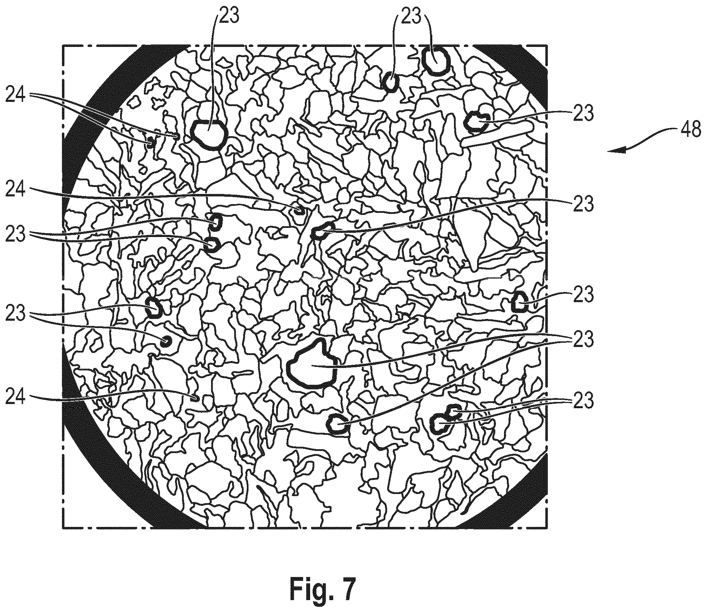

Die Darstellung in Fig. 7 zeigt schematisch und exemplarisch eine Visualisierung von ganzen Körnern 23 und zerkleinerten Körnern 24 in einem durch das Kamerasystem 16 aufgenommenen Bild 48 des gehäckselten Erntegutes. Dabei weisen die als zerkleinerte Körner 24 detektierten oder annotierten Polygone eine den Grenzwert $r_{min}$ unterschreitende Länge ihrer kurzen Hauptachse 47 auf. Die als ganze Körner 23 detektierten oder annotierten Polygone weisen eine den Grenzwert $r_{min}$ überschreitende Länge ihrer kurzen Hauptachse 47 auf.

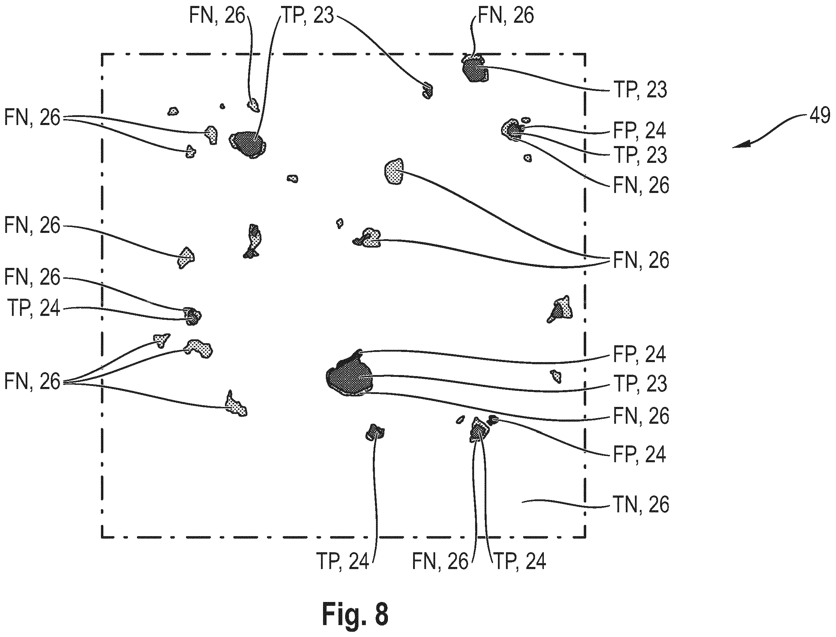

Die Darstellung in Fig. 8 zeigt schematisch und exemplarisch ein Pixelbild 49 des durch das Bildanalyseverfahren analysierten Bildes 48 gemäß Fig. 7. Darin sind die ganzen Körner 23, die zerkleinerten Körner 24 und die Nicht-Kornbestandteile 26 analog zum Binärbild 45 gemäß Fig. 3 dargestellt.

Abweichend vom Binärbild 45 veranschaulicht das Pixelbild 49 mittels des zumindest einen neuronale Netzwerks die, hier und vorzugsweise mittels der U-Net Architektur als Segmentierungsmodell berechneten, Polygone. Dazu werden im Pixelbild 49 die Werte einer Konfusionsmatrix, welche die Häufigkeit der Klassifikationsergebnisse und der Testergebnisse einander gegenüberstellt. Dabei wird zum einen die Häufigkeit der Klassifikation von Nicht-Kornbestandteilen 26 wie Maisspindel- oder Maisstängelfragmente oder dergleichen als Körner 23 sowie zerkleinerte Körner 24, was als "Falsch Positiv" (False Positive FP) bezeichnet wird, sowie die Häufigkeit der Klassifikation von Körnern 23 sowie zerkleinerten Körner 24, die nicht als solche identifiziert und klassifiziert werden, was als "Falsch Negativ" (False Negative FN) bezeichnet wird, bestimmt und in der Konfusionsmatrix erfasst. Zum anderen wird die Häufigkeit der Klassifikation von zutreffend als Körner 23 oder zerkleinerte Körner 24 klassifizierten Kornbestandteilen 25, wobei es sich dabei um eine "Richtig Positiv" (True Positive TP) Klassifikation handelt, sowie die Häufigkeit der zutreffenden Klassifikation von Nicht-Kornbestandteilen 26, was als "Richtig Negativ" (True Negative TN) bezeichnet wird, bestimmt und ebenfalls in der Konfusionsmatrix erfasst. Im Pixelbild 49 sind die als "Richtig Negativ" (TN) klassifizierten Nicht-Kornbestandteile 26, analog zu den Bildern 45 bzw. 45b, in ihrer Gesamtheit als einfarbiger Hintergrund dargestellt.

Dem erfindungsgemäßen Bildanalyseverfahren liegt die Überlegung zugrunde, dass es bei der Erstellung von Trainingsdaten, die durch einen manuellen Annotationsprozess aus den Bilddaten respektive Bildern 48 gewonnen werden, Nicht-Kornbestandteile 26, wie Maisspindel- oder Maisstängelfragmente oder dergleichen, als Körner 23 sowie zerkleinerte Körner 24 identifiziert und klassifiziert werden sowie dass Körner 23 und zerkleinerte Körner 24 nicht als solche identifiziert und klassifiziert werden. Dabei wurde die Erkenntnis gewonnen, dass der Anteil der Falsch Positiv (FP) klassifizierten Körner 23 oder zerkleinerten Körner 24 in der Regel überwiegt, wodurch im Ergebnis die Genauigkeit bei der Bestimmung des Kornaufschlussgrades $CSPS_{opt}$ reduziert wird.

Dieser Einfluss auf die Genauigkeit bei der vorschlagsgemäßen Bestimmung des Kornaufschlussgrades $CSPS_{opt}$ wird dadurch kompensiert, dass eine von dem Segmentierungsmodell verwendete Verlustfunktion mit einem einstellbaren Gewichtungsfaktor $\beta$ gewichtet wird.

Hierzu kann der der Gewichtungsfaktor $\beta$ auf einen Wert größer 0 und kleiner 1, insbesondere auf einen Wert zwischen 0,2 und 0,5, eingestellt werden. Die Einstellung des Gewichtungsfaktors $\beta$ im vorstehend genannten Bereich führt dazu, dass die Sensitivität, d.h. die Wahrscheinlichkeit, mit der ein positives Objekt korrekt als positiv klassifiziert wird, höher gewichtet wird, als der positive Vorhersagewert, d.h. der Anteil der korrekt als positiv klassifizierten Objekte. Mit einem Gewichtungsfaktor größer 0 und kleiner 1 wird die Sensitivität stärker gewichtet, so dass eher die Kornbestandteile 25, ganze Körner 23 sowie zerkleinerte Körner 24, prädiziert werden, bei der eine hohe Wahrscheinlichkeit vorliegt, dass es sich tatsächlich um Kornbestandteile 25 handelt, die der Bestimmung des Kornaufschlussgrades $CSPS_{opt}$ zugrunde gelegt werden. Liegt eine geringere Wahrscheinlichkeit vor, so werden die Kornbestandteile 25 eher nicht prädiziert. Hingegen führt ein Wert für den Gewichtungsfaktor $\beta$ größer 1 dazu, dass die Wahrscheinlichkeit zunimmt, dass ein Objekt als positiv klassifiziert wird, wobei es sich dabei um "Richtig Positiv" (True Positive TP) Objekte, d.h. zutreffend als Körner 23 oder zerkleinerte Körner 24 klassifizierte Kornbestandteile, sowie "Falsch Positiv" (False Positive FP) Objekte handelt, d.h. Nicht-Kornbestandteile 26 werden fälschlich als Körner 23 oder zerkleinerte Körner 34 klassifiziert.

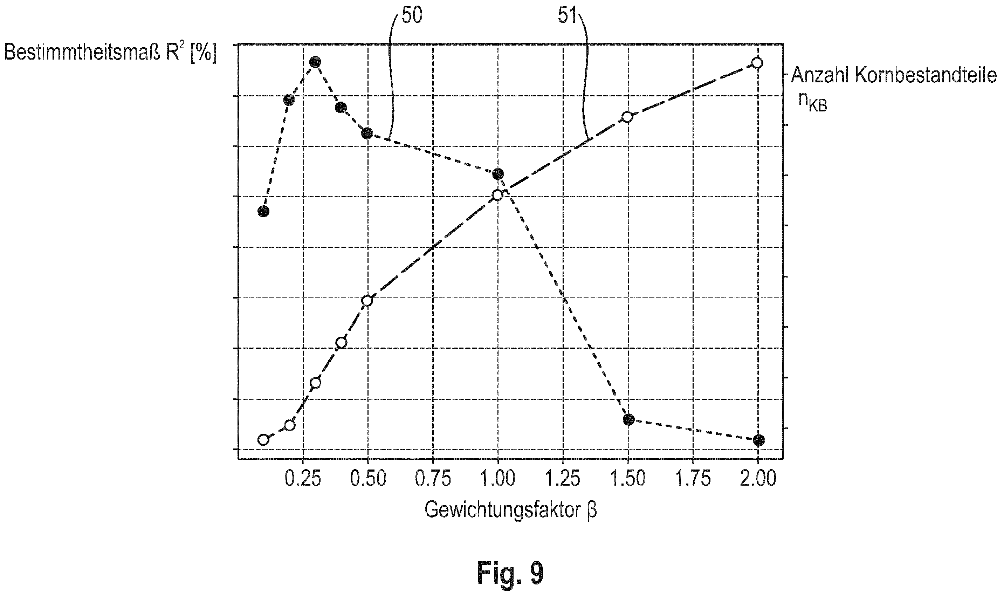

Fig. 9 zeigt exemplarisch ein Diagramm, in welchem ein Verlauf 50 für ein Bestimmtheitsmaß $R^2$ sowie ein Verlauf 51 für eine detektierte Anzahl $n_{KB}$ an Kornbestandteilen 25, die auf der Grundlage von dem zumindest einen neuronalen Netzwerk der Bildanalyseeinrichtung 27 zur Verfügung gestellten Trainingsdaten bestimmt. Wie dem Diagramm gemäß Fig. 9 zu entnehmen ist, ist das mittels der U-Net Architektur als Segmentierungsmodell resultierende Bestimmtheitsmaß $R^2$ für den Gewichtungsfaktor $\beta$, der auf einen Wert zwischen 0,2 und 0,5 eingestellt wird, am höchsten.

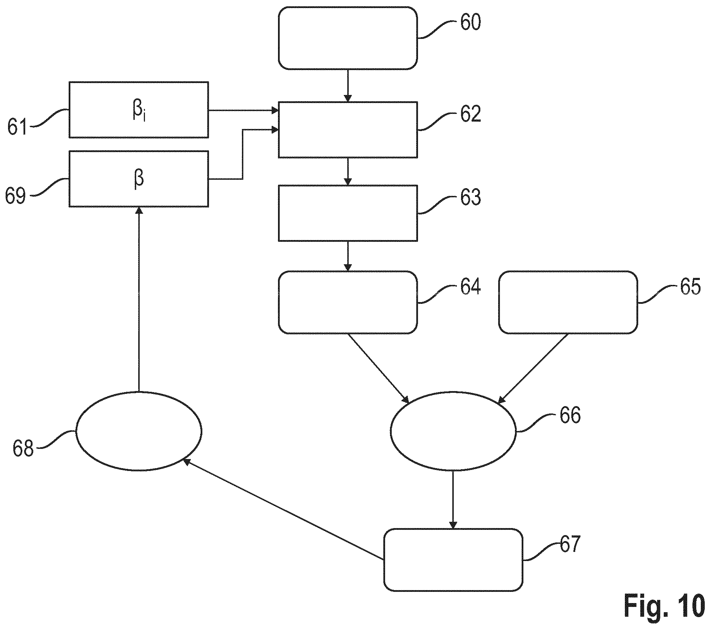

Die Darstellung in Fig. 10 zeigt ein vereinfachtes Flussdiagramm des erfindungsgemäßen Bildanalyseverfahrens. Im Verfahrensschritt 60 werden die durch das Kamerasystem 16 generierten Bilder 44 als Eingangsdaten der Bildanalyseeinrichtung 27 zugeführt. Im Schritt 61 wird ein initialer Gewichtungsfaktor $\beta_i$ einer ersten Bearbeitungsstufe 62 der U-Net Architektur zugeführt. Das Ergebnis der ersten Bearbeitungsstufe 62 wird einer zumindest einer nachfolgenden Bearbeitungsstufe 63 zugeführt, welche im Verfahrensschritt 64 Vorhersagedaten in Form des Binärbildes 45b generiert. Parallel werden im Verfahrensschritt 65 Bilddaten eines analysierten und annotierten Testdatensatzes zugeführt, welche im nachfolgenden Verfahrensschritt 66 mittels einer Verlustfunktion unter Berücksichtigung des im Verfahrensschritt 61 voreingestellten initialen Gewichtungsfaktors $\beta_i$ verarbeitet werden, um daraus im Verfahrensschritt 67 einen Verlustfaktor ("loss score") zu bestimmen. Im nachfolgenden Verfahrensschritt 68 wird eine Bestimmung des Gewichtungsfaktor $\beta$ auf Grundlage des im vorangehenden Verfahrensschritt 67 ermittelten Verlustfaktors vorgenommen, welcher im Verfahrensschritt 69 der ersten Bearbeitungsstufe 62 für die weitere Bildanalyse zugeführt wird.

Die im Verfahrensschritt 66 verwendete Verlustfunktion kann eine dice-loss-Funktion sein. Mittels der dice-loss-Funktion, die bei ungleich verteilten Klassen eine Berücksichtigung der Ergebnisse der selten vorhandenen Klassen sicherstellt, können gute Ergebnisse erzielt werden.

Der initial eingestellte Gewichtungsfaktor $\beta_i$ wird während des vom Feldhäcksler 1 durchzuführenden Ernteprozesses iterativ angepasst. Dabei kann als initialer Gewichtungsfaktor $\beta_i$ der Gewichtungsfaktor $\beta$ eines vorangehend durchgeführten Ernteprozesses auf dem zu bearbeitenden Feld eingestellt werden. Somit kann auf einen bereits in der Vergangenheit optimierten Gewichtungsfaktor $\beta$ zurückgegriffen werden, der dem Bildanalyseverfahren zugrunde gelegt werden kann. Alternativ kann ein initialer Gewichtungsfaktor $\beta_i$ im weiter oben genannten Wertebereich automatisch oder manuell eingestellt werden.

## Bezugszeichenliste

| | | | | |
|---|---|---|---|---|
| 1 | Feldhäcksler | 34 | Sichtfeld |
| 2 | Maispflanze | 35 | Oberseite von 15 |
| 3 | Aufnahmevorrichtung | 36 | Montagevorrichtung |
| 4 | Vorsatzgerät | 37 | Steuereinheit |
| 5 | Einzugseinrichtung | 38 | Halterung |
| 6 | Walzenpaar | 39 | Haltevorrichtung |
| 7 | Walzenpaar | 40 | Halteelement |
| 8 | Häckselvorrichtung | 41 | Halteelement |
| 9 | Häckseltrommel | 42 | Langloch |
| 10 | Gegenschneide | 43 | Langloch |
| 11 | Konditionier- oder Crackerwalze | 44 | Bild |
| 12 | Spalt | 45 | Binärbild |
| 13 | Nachzerkleinerungsvorrichtung | 45a | Ausschnitt von 45 |
| 14 | Nachbeschleuniger | 45b | Binärbild |
| 15 | Auswurfkrümmer | 46 | Lange Hauptachse |
| 16 | Erfassungseinrichtung | 47 | Kurze Hauptachse |
| 17 | Fahrerassistenzsystem | 48 | Bild |
| 18 | Eingabe-Ausgabe-Einheit | 49 | Pixelbild |
| 19 | Fahrerkabine | 50 | Verlauf für Bestimmtheitsmaß |
| 20 | Arbeitsaggregat | 51 | Verlauf für Anzahl Kornbestandteile |
| 21 | Erntegutstrom | | |
| 22 | NIR-Sensor | 60 | Verfahrensschritt |
| 23 | Ganze Körner | 61 | Verfahrensschritt |
| 24 | Zerkleinerte Körner | 62 | Bearbeitungsstufe |
| 25 | Kornbestandteil | 63 | Bearbeitungsstufe |
| 26 | Nicht-Kornbestandteil | 64 | Verfahrensschritt |
| 27 | Bildanalyseeinrichtung | 65 | Verfahrensschritt |
| 28 | Gehäuse | 66 | Verfahrensschritt |
| 29 | Sichtscheibe | 67 | Verfahrensschritt |
| 30 | Spiegel | 68 | Verfahrensschritt |
| 31 | Objektiv | 69 | Verfahrensschritt |
| 32 | RGB-Kamera | $\beta$ | Gewichtungsfaktor |
| 33 | Lichtquelle | $\beta_i$ | Initialer Gewichtungsfaktor |
| D | Gesamtdurchmesser von 29 | $CSPS_{opt}$ | Kornaufschlussgrad |
| $D_{29}$ | Durchmesser | | |
| $n_{KB}$ | Anzahl Kornbestandteile | TP | Richtig Positiv |
| $R^2$ | Bestimmtheitsmaß | TN | Richtig Negativ |
| $r_{min}$ | Grenzwert | FP | Falsch Positive |
| $r_{adapt}$ | Adaptiver Grenzwert | FN | Falsch Negativ |

**Patentansprüche**

1.  Bildanalyseverfahren zur computerimplementierten Bestimmung des Kornaufschlussgrades ($CSPS_{opt}$) von Körnern (23) innerhalb eines von Arbeitsaggregaten (20) eines Feldhäckslers (1) bearbeiteten Erntegutstroms (21), der ganze Körner (23) und zerkleinerte Körner (24) als Kornbestandteile (25) sowie Nicht-Kornbestandteile (26) umfasst, wobei mittels eines Kamerasystems (16) zyklisch Bilder (44) des Erntegutstroms (21) aufgenommen und an eine Bildanalyseeinrichtung (27) zur Auswertung übertragen werden, wobei zumindest ein Arbeitsaggregat (20) in Abhängigkeit vom bestimmten Kornaufschlussgrad ($CSPS_{opt}$) angesteuert wird, **dadurch gekennzeichnet, dass** zur Bestimmung des Kornaufschlussgrades ($CSPS_{opt}$) durch die Bildanalyseeinrichtung (27)

    - in den Bildern (44) enthaltene Bildpixel in Kornbestandteile (25) und Nicht-Kornbestandteile (26) klassifiziert werden,
    - innerhalb der als Kornbestandteile (25) klassifizierten Bildpixel eines aufgenommenen Bildes (44) eine Klassifizierung von ganzen Körnern (23) und zerkleinerten Körnern (24) mittels eines Segmentierungsmodells durchgeführt wird, und
    - dass eine von dem Segmentierungsmodell verwendete Verlustfunktion mit einem einstellbaren Gewichtungsfaktor ($\beta$) gewichtet wird.

2.  Verfahren nach Anspruch 1, **dadurch gekennzeichnet, dass** der Gewichtungsfaktor ($\beta$) auf einen Wert größer 0 und kleiner 1, insbesondere auf einen Wert zwischen 0,2 und 0,5, eingestellt wird.

3.  Verfahren nach Anspruch 1 oder 2, **dadurch gekennzeichnet, dass** als initialer Gewichtungsfaktor ($\beta_i$) ein Gewichtungsfaktor ($\beta$) eines vorangehend durchgeführten Ernteprozesses auf dem zu bearbeitenden Feld eingestellt wird.

4.  Verfahren nach Anspruch 3, **dadurch gekennzeichnet, dass** der initial eingestellte Gewichtungsfaktor ($\beta$) iterativ angepasst wird.

5.  Verfahren nach einem der Ansprüche 1 bis 4, **dadurch gekennzeichnet, dass** der Bildanalyseeinrichtung (27) zur Auswertung die Bilder (44) mit einer Auflösung im Bereich zwischen 128 x 128 Pixel bis 512 x 512 Pixel als Eingangsdaten von dem Kamerasystem (16) zugeführt werden.

6.  Verfahren nach einem der Ansprüche 1 bis 5, **dadurch gekennzeichnet, dass** der Gewichtungsfaktor ($\beta$) in Abhängigkeit von Grenzwerten für Inferenzzeit und Bestimmtheitsmaß des verwendeten Segmentierungsmodells eingestellt wird, wobei der Grenzwert für die Inferenzzeit kleiner 30 ms und der Grenzwert für das Bestimmtheitsmaß größer 70 % ist.

7.  Verfahren nach einem der vorangehenden Ansprüche, **dadurch gekennzeichnet, dass** das Bildanalyseverfahren durch zumindest ein neuronales Netzwerk durchgeführt wird, welches als Segmentierungsmodell eine U-Net Architektur verwendet.

8.  Verfahren nach einem der vorangehenden Ansprüche, **dadurch gekennzeichnet, dass** der Verlustfunktion die mittels des Segmentierungsmodells bestimmten Klassifikationsdaten und die korrespondierenden Trainingsdaten von ganzen Körnern (23) und zerkleinerten Körnern (24) zugeführt werden, woraus ein Verlustwert bestimmt wird, der in einem Optimierungsschritt zur Anpassung des Gewichtungsfaktors ($\beta$) verwendet wird.

9.  Verfahren nach einem der Ansprüche 1 bis 8, **dadurch gekennzeichnet, dass** zur Klassifizierung von ganzen Körnern (23) und zerkleinerten Körnern (24) eine Längenbestimmung einer langen Hauptachse (46) und einer kurzen Hauptachse (47) jedes klassifizierten Kornbestandteils (25) mittels eines Längen-Breiten-Vergleichs durchgeführt wird, und dass zur Berechnung des Kornaufschlussgrades ($CSPS_{opt}$) der Quotient aus der Summe der Fläche von klassifizierten Kornbestandteilen (25), die einen adaptiven Grenzwert ($r_{adapt}$) für die Länge der kurzen Hauptachsen (47) unterschreiten, und der Summe der Fläche aller klassifizierten Kornbestandteile (25), gebildet wird.

10. Verfahren nach Anspruch 9, **dadurch gekennzeichnet, dass** der adaptive Grenzwert ($r_{adapt}$) automatisch und/oder manuell adaptiert wird.

11. Verfahren nach Anspruch 9 oder 10, **dadurch gekennzeichnet, dass** der adaptive Grenzwert ($r_{adapt}$) zyklisch in Intervallen adaptiert wird.

**12.** Selbstfahrender Feldhäcksler (1), umfassend ein Vorsatzgerät (4) als Arbeitsaggregat (20) zur Aufnahme von Erntegut, Arbeitsaggregate (20) zur Bearbeitung eines aus dem aufgenommen Erntegut erzeugten Erntegutstromes (21), ein Fahrerassistenzsystem (17), welches zur Ansteuerung der Arbeitsaggregate (20) ausgeführt und eingerichtet ist, ein Kamerasystem (16), welches zyklisch Bilder (44) des Erntegutstroms (21) aufnimmt und an eine Bildanalyseeinrichtung (27) überträgt, um einen Kornaufschlussgrad (CSPS$_{opt}$) von Körnern (23) im Erntegutstrom (21) zu bestimmen, wobei das Fahrerassistenzsystem (17) zur Ansteuerung eines als Nachzerkleinerungsvorrichtung (13) ausgeführten Arbeitsaggregates (20) in Abhängigkeit vom bestimmten Kornaufschlussgrad (CSPS$_{opt}$) ausgeführt und eingerichtet ist,
**dadurch gekennzeichnet, dass** die Bildanalyseeinrichtung (27) zur Bildanalyse unter Verwendung des Bildanalyseverfahrens nach einem der Ansprüche 1 bis 11 ausgeführt und eingerichtet ist.

**13.** Feldhäcksler (1) nach Anspruch 12, **dadurch gekennzeichnet, dass** die Bildanalyseeinrichtung (27) mit einem Algorithmus zum maschinellen Lernen, welcher als neuronales Netz in Form einer U-Net Architektur eines gefalteten neuronalen Netzwerks (Convolutional Neural Network) oder als rückgekoppeltes neuronales Netzwerk (Recurrent Neural Network) ausgeführt ist, ausgebildet ist.

**14.** Feldhäcksler (1) nach Anspruch 12 oder 13, **dadurch gekennzeichnet, dass** der Feldhäcksler (1) ein Kamerasystem (16) aufweist, welches dazu ausgeführt und eingerichtet ist, den von den Arbeitsaggregaten (20) bearbeiteten Erntegutstrom (21) zu erfassen und auszuwerten, wobei das Kamerasystem (16) eine RGB-Kamera (32), die zur Erfassung des einen Auswurfkrümmer (15) des Feldhäckslers (1) durchströmenden Erntegutstroms (21) eingerichtet ist und in einem an dem Auswurfkrümmer (15) angeordneten Gehäuse (28) angeordnet ist, umfasst, wobei in dem Auswurfkrümmer (15) eine lichtdurchlässige Sichtscheibe (29) angeordnet ist, an welcher der zu detektierende Erntegutstrom (21) vorbeiströmt, sowie zumindest eine der Sichtscheibe (29) gegenüberliegend angeordnete Lichtquelle (33), deren Lichtstrahlen auf den Erntegutstrom (21) gerichtet sind, zumindest ein Spiegel (30), welcher von dem Erntegutstrom (21) reflektiertes Licht in ein an der RGB-Kamera (32) angeordnetes Objektiv (31) umlenkt, wobei die RGB-Kamera (32) vom Erntegutstrom (21) aufgenommene Bilder (44) an die Bildanalyseeinrichtung (27) zur Auswertung überträgt.

**15.** Feldhäcksler nach Anspruch 14, **dadurch gekennzeichnet, dass** die RGB-Kamera (28) die Bilder (44) mit einer Bildrate im Bereich von 20 Bildern/Sekunde bis 40 Bildern/Sekunde aufnimmt, dass die Belichtungszeit zwischen 5 Mikrosekunden und 258 Mikrosekunden liegt und dass das Objektiv (31) der RGB-Kamera (32) eine Brennweite zwischen 7 mm und 10 mm aufweist.

**Claims**

**1.** Image analysis method for the computer-implemented determination of the degree of grain fragmentation (CSPS$_{opt}$) of grains (23) within a harvested crop flow (21) processed by working units (20) of a forage harvester (1) and comprising whole grains (23) and comminuted grains (24) as grain constituents (25) and non-grain constituents (26), wherein by means of a camera system (16) images (44) of the harvested crop flow (21) are cyclically recorded and transmitted to an image analysis device (27) for evaluation, wherein at least one working unit (20) is controlled depending on the determined degree of grain fragmentation (CSPS$_{opt}$), **characterized in that** for determining the degree of grain fragmentation (CSPS$_{opt}$) by means of the image analysis device (27)

- image pixels contained in the images (44) are classified into grain constituents (25) and non-grain constituents (26),
- within the image pixels of a recorded image (44) classified as grain constituents (25), a classification of whole grains (23) and comminuted grains (24) is carried out by means of a segmentation model, and
- **in that** a loss function used by the segmentation model is weighted with an adjustable weighting factor ($\beta$).

**2.** Method according to Claim 1, **characterized in that** the weighting factor ($\beta$) is set to a value of greater than 0 and less than 1, in particular to a value of between 0.2 and 0.5.

**3.** Method according to Claim 1 or 2, **characterized in that** a weighting factor ($\beta$) of a harvesting process previously performed on the field to be processed is set as an initial weighting factor ($\beta_i$).

**4.** Method according to Claim 3, **characterized in that** the initially set weighting factor ($\beta$) is adapted iteratively.

5. Method according to any of Claims 1 to 4, **characterized in that** the images (44) with a resolution in the range of between 128 x 128 pixels and 512 x 512 pixels are supplied as input data, by the camera system (16), to the image analysis device (27) for evaluation.

6. Method according to any of Claims 1 to 5, **characterized in that** the weighting factor ($\beta$) is set depending on limit values for inference time and coefficient of determination of the segmentation model used, wherein the limit value for the inference time is less than 30 ms and the limit value for the coefficient of determination is greater than 70%.

7. Method according to any of the preceding claims, **characterized in that** the image analysis method is carried out by at least one neural network, which uses a U-Net architecture as segmentation model.

8. Method according to any of the preceding claims, **characterized in that** the classification data determined by means of the segmentation model and the corresponding training data of whole grains (23) and comminuted grains (24) are supplied to the loss function, from which a loss value is determined, which is used in an optimization step for adapting the weighting factor ($\beta$).

9. Method according to any of Claims 1 to 8, **characterized in that** for classifying whole grains (23) and comminuted grains (24), a length determination of a long main axis (46) and a short main axis (47) of each classified grain constituent (25) is carried out by means of a length-width comparison, and **in that** for calculating the degree of grain fragmentation ($CSPS_{opt}$), the quotient is formed from the sum of the area of classified grain constituents (25) that fall below an adaptive limit value ($r_{adapt}$) for the length of the short main axes (47), and the sum of the area of all classified grain constituents (25).

10. Method according to Claim 9, **characterized in that** the adaptive limit value ($r_{adapt}$) is adapted automatically and/or manually.

11. Method according to Claim 9 or 10, **characterized in that** the adaptive limit value ($r_{adapt}$) is adapted cyclically at intervals.

12. Self-propelled forage harvester (1), comprising an attachment (4) as a working unit (20) for picking up harvested crop, working units (20) for processing a harvested crop flow (21) generated from the harvested crop picked up, a driver assistance system (17) designed and configured for controlling the working units (20), a camera system (16), which cyclically records images (44) of the harvested crop flow (21) and transmits them to an image analysis device (27) in order to determine a degree of grain fragmentation ($CSPS_{opt}$) of grains (23) in the harvested crop flow (21), wherein the driver assistance system (17) is designed and configured for controlling a working unit (20) designed as a post-comminuting device (13) depending on the determined degree of grain fragmentation ($CSPS_{opt}$), **characterized in that** the image analysis device (27) is designed and configured for image analysis using the image analysis method according to any of Claims 1 to 11.

13. Forage harvester (1) according to Claim 12, **characterized in that** the image analysis device (27) is embodied with an algorithm for machine learning, which is designed as a neural network in the form of a U-Net architecture of a convolutional neural network or as a recurrent neural network.

14. Forage harvester (1) according to Claim 12 or 13, **characterized in that** the forage harvester (1) has a camera system (16) designed and configured to capture and evaluate the harvested crop flow (21) processed by the working units (20), wherein the camera system (16) comprises an RGB camera (32), which is configured for capturing the harvested crop flow (21) flowing through a discharge chute (15) of the forage harvester (1) and is arranged in a housing (28) arranged on the discharge chute (15), wherein a light-transmissive observation window (29) is arranged in the discharge chute (15), the harvested crop flow (21) to be detected flowing past said observation window, and also at least one light source (33) which is arranged opposite the observation window (29) and whose light beams are directed onto the harvested crop flow (21), at least one mirror (30), which deflects light reflected by the harvested crop flow (21) into a lens (31) arranged on the RGB camera (32), wherein the RGB camera (32) transmits recorded images (44) of the harvested crop flow (21) to the image analysis device (27) for evaluation.

15. Forage harvester according to Claim 14, **characterized in that** the RGB camera (28) records the images (44) with a frame rate in the range of 20 frames/second to 40 frames/second, **in that** the exposure time is between 5 microseconds and 258 microseconds and **in that** the lens (31) of the RGB camera (32) has a focal length of between 7 mm and 10 mm.

**Revendications**

1. Procédé d'analyse d'image destiné à la détermination, mise en œuvre par ordinateur, du degré d'éclatement des grains (CSPS$_{opt}$) de grains (23) à l'intérieur d'un flux de récolte (21) qui est traité par des organes de travail (20) d'une ramasseuse-hacheuse (1) et comporte des grains entiers (23) et des grains broyés (24) en tant que constituants grains (25) ainsi que des constituants non-grains (26), des images (44) du flux de récolte (21) étant recueillies de manière cyclique à l'aide d'un système de caméra (16) et étant transmises à un dispositif d'analyse d'image (27) en vue de leur interprétation, au moins un organe de travail (20) étant activé en fonction du degré d'éclatement des grains (CSPS$_{opt}$), **caractérisé en ce que**, pour la détermination du degré d'éclatement des grains (CSPS$_{opt}$) par le dispositif d'analyse d'image (27),

   - des pixels d'image contenus dans les images (44) sont classifiés en constituants grains (25) et en constituants non-grains (26),
   - une classification de grains entiers (23) et de grains broyés (24) est effectuée à l'aide d'un modèle de segmentation à l'intérieur des pixels d'image d'une image (44) recueillie, classifiés comme constituants grains (25), et
   - qu'une fonction de perte utilisée par le modèle de segmentation est pondérée avec un facteur de pondération ($\beta$) réglable.

2. Procédé selon la revendication 1, **caractérisé en ce que** le facteur de pondération ($\beta$) est réglé à une valeur supérieure à 0 et inférieure à 1, en particulier à une valeur comprise entre 0,2 et 0,5.

3. Procédé selon la revendication 1 ou 2, **caractérisé en ce qu'**un facteur de pondération ($\beta$) d'un processus de récolte effectué précédemment dans le champ à travailler est réglé en tant que facteur de pondération initial ($\beta_i$).

4. Procédé selon la revendication 3, **caractérisé en ce que** le facteur de pondération ($\beta$) initialement réglé est adapté de manière itérative.

5. Procédé selon une des revendications 1 à 4, **caractérisé en ce que** les images (44) sont amenées par le système de caméra (16) en tant que données d'entrée au dispositif d'analyse d'image (27), avec une résolution comprise dans la plage allant de 128 x 128 pixels à 512 x 512 pixels, en vue de l'évaluation.

6. Procédé selon une des revendications 1 à 5, **caractérisé en ce que** le facteur de pondération ($\beta$) est réglé en fonction de valeurs limites pour le temps d'inférence et le degré de certitude du modèle de segmentation utilisé, la valeur limite pour le temps d'inférence étant inférieure à 30 ms, et la valeur limite pour le degré de certitude étant supérieure à 70 %.

7. Procédé selon une des revendications précédentes, **caractérisé en ce que** le procédé d'analyse d'image est mis en œuvre par au moins un réseau de neurones qui utilise une architecture U-Net en tant que modèle de segmentation.

8. Procédé selon une des revendications précédentes, **caractérisé en ce que** les données de classification, déterminées à l'aide du modèle de segmentation, et les données d'entraînement correspondantes de grains entiers (23) et de grains broyés (24) sont amenées à la fonction de perte, et à partir de celles-ci une valeur de perte est déterminée, qui est utilisée lors d'une étape d'optimisation pour adapter le facteur de pondération ($\beta$).

9. Procédé selon une des revendications 1 à 8, **caractérisé en ce que**, pour la classification de grains entiers (23) et de grains broyés (24), une détermination de longueur d'un grand axe principal (46) et d'un petit axe principal (47) de chaque constituant grain (25) classifié est réalisée à l'aide d'une comparaison longueur-largeur, et **en ce que**, pour le calcul du degré d'éclatement des grains (CSPS$_{opt}$), le quotient est formé à partir de la somme de la superficie de constituants grains (25) classifiés, qui dépassent vers le bas une valeur limite adaptative ($r_{adapt}$) pour la longueur des petits axes principaux (47), et de la somme de la superficie de l'ensemble des constituants grains (25) classifiés.

10. Procédé selon la revendication 9, **caractérisé en ce que** la valeur limite adaptative ($r_{adapt}$) est adaptée de manière automatique et/ou manuelle.

11. Procédé selon la revendication 9 ou 10, **caractérisé en ce que** la valeur limite adaptative ($r_{adapt}$) est adaptée de manière cyclique par intervalles.

12. Ramasseuse-hacheuse (1) automotrice, comprenant une tête de récolte (4) en tant qu'organe de travail (20) pour ramasser des produits à récolter, des organes de travail (20) pour traiter un flux de récolte (21) généré à partir de la récolte ramassée, un système d'aide à la conduite (17) qui est réalisé et conçu pour activer les organes de travail (20), un système de caméra (16) qui recueille de manière cyclique des images (44) du flux de récolte (21) et les transmet à un dispositif d'analyse d'image (27) pour déterminer un degré d'éclatement des grains (CSPS$_{opt}$) de grains (23) dans le flux de récolte (21), le système d'aide à la conduite (17) étant réalisé et conçu pour activer un organe de travail (20) réalisé comme dispositif de broyage complémentaire (13), en fonction du degré d'éclatement des grains (CSPS$_{opt}$) déterminé, **caractérisée en ce que** le dispositif d'analyse d'image (27) est réalisé et conçu pour l'analyse d'image en utilisant le procédé d'analyse d'image selon une des revendications 1 à 11.

**13.** Ramasseuse-hacheuse (1) selon la revendication 12, **caractérisée en ce que** le dispositif d'analyse d'image (27) est réalisé avec un algorithme d'apprentissage automatique qui est conçu comme réseau de neurones sous la forme d'une architecture U-Net d'un réseau de neurones convolutif (Convolutional Neural Network) ou comme réseau de neurones récurrent (Recurrent Neural Networt.

**14.** Ramasseuse-hacheuse (1) selon la revendication 12 ou 13, **caractérisée en ce que** la ramasseuse-hacheuse (1) présente un système de caméra (16) qui est réalisé et conçu pour détecter et évaluer le flux de récolte (21) traité par les organes de travail (20), le système de caméra (16) comportant une caméra RVB (32), qui est conçue pour la détection du flux de récolte (21) passant dans une goulotte d'éjection (15) de la ramasseuse-hacheuse (1) et est disposée dans un boîtier (28) placé sur la goulotte (15), une vitre laissant passer la lumière (29), devant laquelle s'écoule le flux de récolte (21) à détecter, étant disposée dans la goulotte d'éjection (15), et comportant au moins une source lumineuse (33), qui est disposée en vis-à-vis de la vitre (29) et dont les rayons lumineux sont dirigés sur le flux de récolte (21), au moins un miroir (30) qui dévie la lumière réfléchie par le flux de récolte (21) dans un objectif (31) placé sur la caméra RVB (32), la caméra RVB (32) transmettant des images (44), prises du flux de récolte (21), au dispositif d'analyse d'image (27), en vue de l'évaluation.

**15.** Ramasseuse-hacheuse selon la revendication 14, **caractérisée en ce que** la caméra RVB (28) recueille les images (44) avec un débit d'images situé dans la plage allant de 20 images/seconde à 40 images/seconde, **en ce que** le temps d'exposition est compris entre 5 microsecondes et 258 microsecondes, et **en ce que** l'objectif (31) de la caméra RVB (32) présente une distance focale comprise entre 7 mm et 10 mm.

Fig. 1

EP 4 480 296 B1

Fig. 2

Fig. 4

Fig. 3

Fig. 6

Fig. 5

**Fig. 7**

**Fig. 8**

EP 4 480 296 B1

Anzahl Kornbestandteile $n_{KB}$

Bestimmtheitsmaß $R^2$ [%]

51

50

Gewichtungsfaktor $\beta$

0.25 0.50 0.75 1.00 1.25 1.50 1.75 2.00

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014011308 A1
- DE 102020122202 A1
- DE 102020122208 A1
- DE 102021116118 A1